# EUROPEAN PATENT APPLICATION

(11) **EP 3 675 550 A1**
(43) Date of publication of application: **01.07.2020**
(21) Application number: 18306858.4
(22) Date of filing: 27.12.2018
(51) Int. Cl.: H04W 24/04, H04W 36/30, H04W 88/04

(54) **ALTERNATE WAN CONNECTIVITY TO HOME IOT DEVICES**

(71) Applicant: InterDigital CE Patent Holdings, 75017 Paris (FR)
(72) Inventor: PARAMASIVAM, Gopi, 600100 CHENNAI (IN); SUNDARAM, Pradeep, 600056 CHENNAI (IN)
(74) Representative: Vidon Brevets & Stratégie

(57) **Abstract**

A method to connect to a secondary wide area network after detecting a connectivity failure in a first wide area network includes detecting a connectivity failure of the first wide area network at a network access device. The network access device having a wireless interface to a mobile device having access to a second wide area network. Configuring the mobile device from a station mode of operation for the network access device to a hotspot mode of operation for the network access device. Configuring the network access device wireless interface to the mobile device to switch from access point mode to station mode and connecting to the mobile device for network access device access to the second-wide area network. The network access device is then configured to direct data to the second-wide area network via the mobile device.

## Description

### FIELD

The present disclosure relates to communications in a network setting, particularly but not exclusively, it relates to a method to provide alternative wide area network connectivity in a home gateway for IoT sensors.

### BACKGROUND

In today's home, multiple client devices connect to the internet through either a centralized network access device like a home gateway or in the instance of other devices like mobile phones or other similar devices that have an independent external network connectivity. Even if mobile devices are enabled with a data plan, when they are in home network, the default configuration of the mobile is to act as a wireless station to connect to the home gateway access point through wireless local area network to access internet services.

In the context of the home Internet of Things (IoT) setup, a home IoT gateway in addition to features of a normal data modem, support IoT protocols and standards like Zigbee, ZWave, and the like. Multiple critical devices like fire alarm, burger alarm or gas leak alarm exist for which availability of access to cloud services is critical. These devices get connected to the IoT cloud using an IoT gateway which has a WAN connection.

During some critical times like storms, it is quite possible that the wired connectivity of the Home IoT gateway gets severed or faulty, which disturbs the cloud connectivity of critical devices and their service becoming unavailable. Some home gateway devices support one or more wide area network interfaces like DSL or gigabit ethernet and LTE. In the instance of a gateway that supports multiple WAN interfaces, one interface will be considered as primary and other as secondary. The gateway automatically switches to secondary WAN interface in case the primary fails.

The disadvantages of this solution are:
(a) There are not many gateways in the market that provide dual WAN interface,
(b) There is a large deployed foot print of gateways already deployed that do not support dual WAN connectivity,
(c) An extra WAN interface increases the cost of the product, and
(d) The known solution requires a dedicated LTE connection plan to be purchased by the end user and will remain unused most of the time. This is an unnecessary cost burden to the end user. This disclosure addresses an alternative solution that may address one or more of the above disadvantages.

### SUMMARY

This summary is provided to introduce a selection of concepts in a simplified form as a prelude to the more detailed description that is presented later. The summary is not intended to identify key or essential features, nor is it intended to delineate the scope of the claimed subject matter.

In one embodiment of the disclosure, a method to connect to a secondary wide area network after detecting a connectivity failure in a first wide area network includes detecting a connectivity failure of the first wide area network at a network access device such as, for example, a gateway. The gateway having a wireless interface to a mobile device having access to a second wide area network. Configuring the mobile device from a station mode of operation for the gateway to a hotspot mode of operation for the gateway. Configuring the gateway wireless interface to the mobile device to switch from access point mode to station mode and connecting to the mobile device for gateway access to the second wide area network. The gateway is then configured to direct data to the second wide area network via the mobile device.

In another embodiment, an apparatus includes a network access device such as a gateway having connection to a first wide area network, a wireless interface to the gateway in communication with a mobile device, the mobile device having connection to a second wide area network, a data reception interface to the gateway to accept data from external devices, and a processor of the gateway configured to detect a connectivity failure of the first wide area network, instruct the mobile device to change from a station mode to a hotspot mode, instruct the wireless interface to switch from access point mode to station mode and connect to the mobile device for the gateway to access the second wide area network, and rout data received at the data reception interface to the second wide area network via the mobile device instead of to the first wide area network.

In another embodiment, a method performed by a mobile device includes, in response to a reconfiguration command from a network access device, the mobile device switches from a station mode to a hotspot mode, requests data collected by the network access device, and transmits the data to a cellular network associated with the mobile device.

In another embodiment, a mobile device includes a wireless interface in communication with a gateway, wherein the gateway instructs the mobile device to switch from a station mode on the wireless interface to a hotspot mode for data provided by the gateway. The mobile device includes a cellular transmitter interface for transmitting the data provided by the gateway, a processor configured to accept the instruction to switch from the station mode to the hotspot mode, the processor further configured to request the data from the gateway and communicate the data to a wide area network using the cellular transmitter.

Additional features and advantages will be made apparent from the following detailed description of illustrative embodiments which proceeds with reference to the accompanying figures. The drawings are for purposes of illustrating the concepts of the disclosure and is not necessarily the only possible configuration for illustrating the disclosure. Features of the various drawings may be combined unless otherwise stated.

### BRIEF DESCRIPTION OF THE DRAWINGS

The foregoing summary, as well as the following detailed description of illustrative embodiments, is better understood when read in conjunction with the accompanying drawings, which are included by way of example, and not by way of limitation with regard to the present principles. In the drawings, like numbers represent similar elements.
Figure 1 is an example architecture of a Home Gateway having IoT sensors;
Figure 2 is an example signal diagram for switching from a first WAN to a second WAN;
Figure 3 is an example signal diagram for switching back from a second WAN to a first WAN;
Figure 4 is another an example signal diagram for switching from a first WAN to a second WAN;
Figure 5 is another example signal diagram for switching back from a second WAN to a first WAN;
Figure 6 depicts a flow diagram of a method performed by a gateway according to principles of the disclosure;
Figure 7 depicts a flow diagram of a method performed by a mobile device according to principles of the disclosure; and
Figure 8 depicts one embodiment of a gateway configuration that implements the principles of the disclosure.

### DETAILED DISCUSSION OF THE EMBODIMENTS

In the following description of various illustrative embodiments, reference is made to the accompanying drawings, which form a part thereof, and in which is shown, by way of illustration, how various embodiments may be practiced. It is to be understood that other embodiments maybe utilized, and structural and functional modification maybe made without departing from the scope of the present principles.

Embodiments of this disclosure present an alternative to the internally dedicated two WAN connectivity configuration of a two-WAN network access device such as a two-WAN gateway. Although the description that follows refers to a gateway, such gateway is only an example of a network access device. As indicted above, the dedicated two WAN gateway requires a subscription to two WANs which would be connected to the gateway. As such, only one WAN is used as the primary WAN and the other is an un-used backup in case of a loss of primary WAN connectivity. The principles of this disclosure do not require a second dedicated WAN connection to a gateway. Instead, the principles of this disclosure involve including a software WAN steering controller service in the gateway and a companion software WAN steering agent in mobile device.

In one aspect of this disclosure, the gateway controller senses the failure of a wide area network (WAN) interface to the gateway to retain connectivity to a network, and seamlessly discovers the presence of a mobile companion agent service in the home wireless local area network. The WAN interface to the gateway may lose connectivity due to a multitude of reasons, such as WAN source network failure or WAN interface failure. In any event, the gateway controller and mobile agent authenticate each other and then the gateway gets the mobile's wireless configuration details such as SSID, security mode, and password; preferably in a secure manner.

The gateway controller instructs the mobile agent to enable its mobile data network, disconnect from the gateway, and change its wireless configuration from operation in a station mode to operation in a hotspot mode. The gateway controller then configures the gateway wireless to switch from operation in an access mode to operation in a station mode and connects to the mobile hotspot using the configuration information acquired previously.

Since the gateway switched from operating in an access point mode to operation in a station mode, all the wireless devices connected to it also become disconnected and only the wired local area network (LAN) clients and external devices, such as IoT sensor devices, remain actively connected to the gateway. To allow only IoT data traffic, the gateway agent configures a backup of the existing firewall and routing table. The gateway operating in station mode then configures the firewall and routing tables of the gateway so that wired LAN traffic is rejected, thus only IoT data traffic reaches the mobile WAN network. Accordingly, the IoT traffic continues to have connectivity to a WAN, in this instance, through the newly established mobile network WAN by routing IoT traffic through the mobile hotspot. In one option, the wired LAN traffic as well as the IoT traffic may have connectivity to the mobile WAN via the mobile device hotspot.

Once the previously failed WAN interface connectivity is restored, the gateway agent senses the network connectivity reconnection, instructs the mobile agent to switch back to station mode, configures the gateway as access point mode, and restores the firewall and routing tables. This results in both wireless and wired LAN devices connecting back to the gateway and start reaching internet using the re-connected WAN.

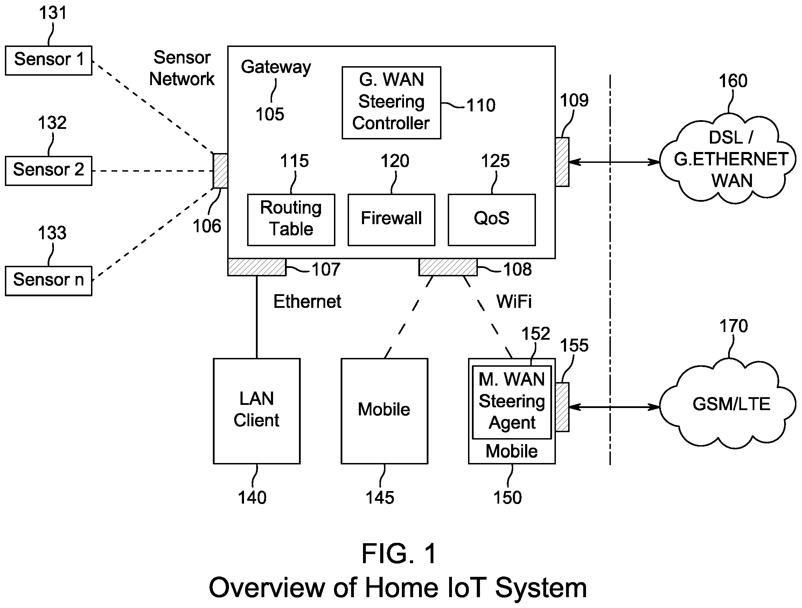

Figure 1 illustrates the overview of a typical IoT home system 100. Home devices connect via multiple access protocols to the gateway. The IoT sensors (131, 132, 132) can be connected the gateway through various IoT access protocols. Some LAN clients, such as client 140, such as computers or printers, are connected using a hard-wired interface to an ethernet port 107. Wireless clients, such as mobile devices 145, 150 may be a mobile phone or laptop computer, are connected using Wi-Fi network via an antenna port 108. In a typical usage scenario, the wireless client devices (145, 150) will be in client mode and the gateway will be in access point mode. In such a scenario, despite the mobile phone (150) has data network (such as an LTE network) enabled, when the mobile device 150 is connected to a Wi-Fi gateway 105, the mobile device's data are routed through the gateway to the network 160. Interface 109 to the network 160 may be a DSL or Gigabit ethernet and the like WAN connection. All the home network data are routed to the WAN interface 109 of the gateway 105.

The gateway 105 forwards the data packets from the home devices (131, 132, 133, 140, 145, 150) to the external internet service of network 160 based on the routing table 115, firewall 120, and QoS configurations 125 of the gateway 105. Based on these configurations, the gateway 105 may reject the packets or forward to external internet services interface 109 or forward another device 140 in the local network via port 107 or give priority to the data packets.

In the instance of connectivity failure to WAN 160, detected via failure of the sole external interface 109 to internet services for the gateway 105, the mobile device 150 have the capability to switch to its own data network. In this instance, the mobile device 150 retains its cellular interface to the WAN 170, such as an LTE WAN. However critical IoT devices, such as devices 131, 132, and 133, will not be able to reach the internet services via interface port 109 since they don't have an external internet interface on their own.

According to an aspect of the disclosure, a method to provide backup WAN connectivity can be implemented in two ways based how the service is discovered and controlled. In a first version of an embodiment method, a Universal Plug and Play (UPnP) Simple Service Discovery Protocol (SSDP) is used to discover the mobile agent service in the local network where the gateway 105 resides. Then, based on the discovered service's action call, the gateway controls the mobile agent to activation. In a second version of an embodiment method, a UPnP SSDP is used to discover the mobile agent service in the network. Then, using Representational State Transfer Technology (REST) Application Programming Interface (API), controls the mobile agent to activation.

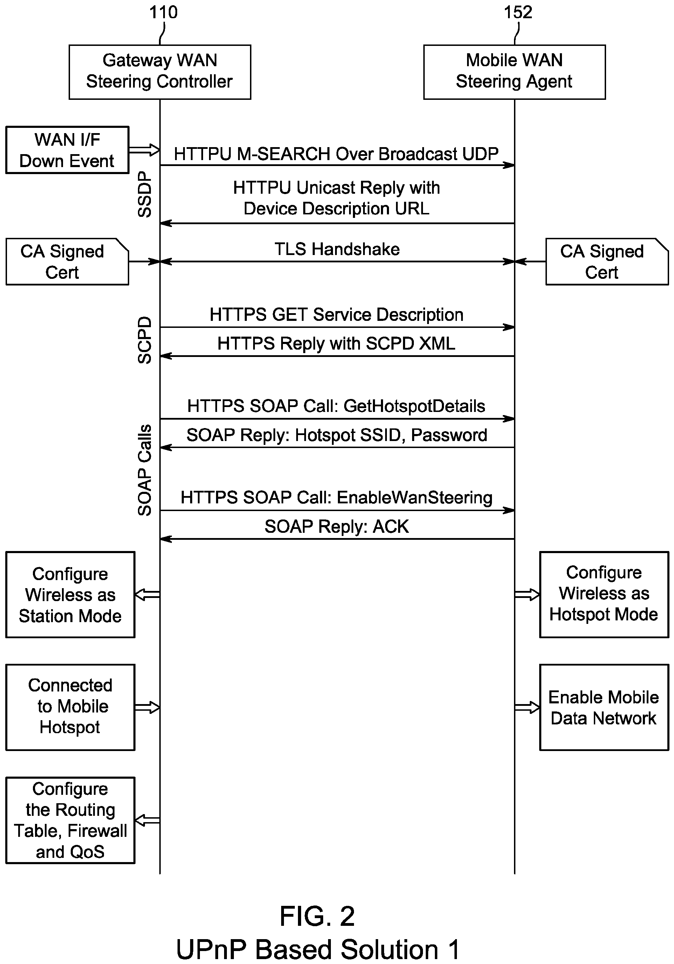

Figure 2 depicts a communication diagram for a UPnP based solution of the first embodiment version method. The gateway WAN Steering Controller 110 (also see Figure 1) is in communication with the Mobile WAN Steering Agent 152 (see Figure 1). The gateway WAN steering controller 110 is responsible for detecting the external internet interface 109 connectivity failure, discovering the presence of mobile WAN steering agent 152 in the LAN network of the gateway 105, authenticating the mobile agent, controlling mobile agent, configuring the gateway routing table 115 firewall 120 and QoS 125 functionality, configuring the gateway wireless interface 108, providing UPnP Control Point with Device Protection support, and accessing the REST API Client as needed. The gateway WAN steering controller 110 can be part of the software image in the gateway shipped to the customer. In the instance of an already existing gateway in the field, this component can be installed through remote software upgradation.

The mobile WAN steering agent 152 is responsible for authenticating the gateway agent in the gateway steering controller 110, configuring the mobile wireless interface, configuring the mobile data interface, providing UPnP Device with Device Protection support, and accessing the REST API Server as needed. The mobile agent 152 can be hosted in the mobile application market place and installed in one or more mobile devices of the customer. Both the gateway and mobile devices will be provisioned with Certificate Authority (CA) signed certificates by the service provider during the installation of these component.

Referring in general to Figure 2, the gateway WAN steering controller 110 will be listening for WAN interface connectivity status for the network 160. Once the WAN interface down (connectivity lost) event is received, it initiates a sequence actions to ensure WAN connectivity for the IoT devices is restored with minimal disturbance. Figure 2 depicts example communication exchanges between the steering controller 110 and the mobile WAN steering agent. Additional details and example code for an implementation of the exchanges of Figure 2 follow.

The Controller 110 searches the LAN network for presence of Mobile Agent 152. In detail, the controller acts as a UPnP Control Point and Mobile Agent as a UPnP Device. The controller 110 broadcasts a M-Search SSDP message with Search Target as "urn:wansteeringtch-org:service:wansteering:1" All the UPnP Devices in the LAN network of the gateway 105 that support wansteering service will respond with their device description details.

Example code is as follows:
HTTPU Broadcast: 239.255.255.250:1900
M-SEARCH * HTTP/1.1
HOST: 239.255.255.250:1900
ST: urn:wansteering-tch-org:service:wansteering:1

Next, the controller then filters out only mobile agent's UPnP response message. In detail, all the UPnP devices in the network that supports wansteering will respond with SECURELOCATION details which will contain the IP address of the mobile agent device. This IP address will be used by the Controller for further unicast communication with the mobile device. Using SECURELOCATION information, the Controller will try to establish TLS session with the mobile UPnP device. Since both gateway and mobile device has common CA signed certificates, their TLS handshake will pass.

This is one way the gateway controller 110 and mobile agent 152 authenticate each other and establishes a secure connection between them. If two mobile agents are present, then the one which has best WiFi RSSI signal strength may be chosen.

Example code is as follows:
HTTP/1.1 200 OK
LOCATION: http://192.168.1.101:1234/devicedescription.xml
SECURELOCATION.UPNP.ORG: https://192.168.1.101:1234/devicedescription.xml
USN: uuid:TCH_GW_1_00-12-34-56-78-90
ST: urn:wansteering-tch-org:service:wansteering:1

Once a secure connection is established, the Controller 110 gets a SCPD service description from the mobile agent 152, to get the list of actions supported by it.

Example code is as follows:

```
       GET https://192.168.1.101:1234/devicedescription.xml
       HTTP/1.1 200 OK
       <device>
             <serviceList>
                    <service>
                           <controlURL>/ctl/wansteering</controlURL>
                           <SCPDURL> /wansteering.xml</SCPDURL>
                    </service>
             <serviceList>
       </device>
       GET https://192.168.1.101:1234/wansteering.xml
       HTTP/1.1 200 OK
             <action>
                    <name> GetHotspotDetails </name>
                    <argumentList> </argumentList>
             </action>
             <action>
                    <name> EnableWanSteering </name>
                    <argumentList> </argumentList>
             </action>
             <action>
                    <name> DisableWanSteering </name>
                    <argumentList> </argumentList>
```

With the action list got from SCPD, call the action to get the mobile Hotspot configurations, such as the SSID and password.

Example code is as follows:

```
       POST https://192.168.1.101:1234/ctl/wansteering
       <SOAP : Body>
             <GetHotspotDetails xmlns:m= "....:wansteering:1"
       </Body>
       HTTP/1.1 200 OK
```

Instruct the mobile agent to start WAN Steering process. In detail, on receiving this action, the mobile agent switches its wireless configuration from station mode to hotspot mode. Then, Enable the mobile data plan.

Example code is as follows:

```
       POST https://192.168.1.101:1234/ctl/wansteering
       <SOAP : Body>
             <EnableWanSteering xmlns:m= "....:wansteering:1"
       </Body>
       HTTP/1.1 200 OK
```

Start the WAN Steering process in the gateway. In detail, configure the wireless from access point mode to station mode, using the SSID, password got from previous step, connect to the mobile hotspot.

Once successfully connected to the mobile, take backup of existing routing table, firewall and QoS configurations.

Change the firewall, routing table and QoS configurations to allow only the IoT devices data through gateway wireless interface. In detail, block the external internet access to all the ethernet LAN devices using iptables rules. Change the default gateway route for external internet service access to the Wi-Fi interface of the gateway. Change QoS configuration to reflect the WAN interface as Wi-Fi interface of the gateway. The IoT device data is thus sent to the cellular network 170.

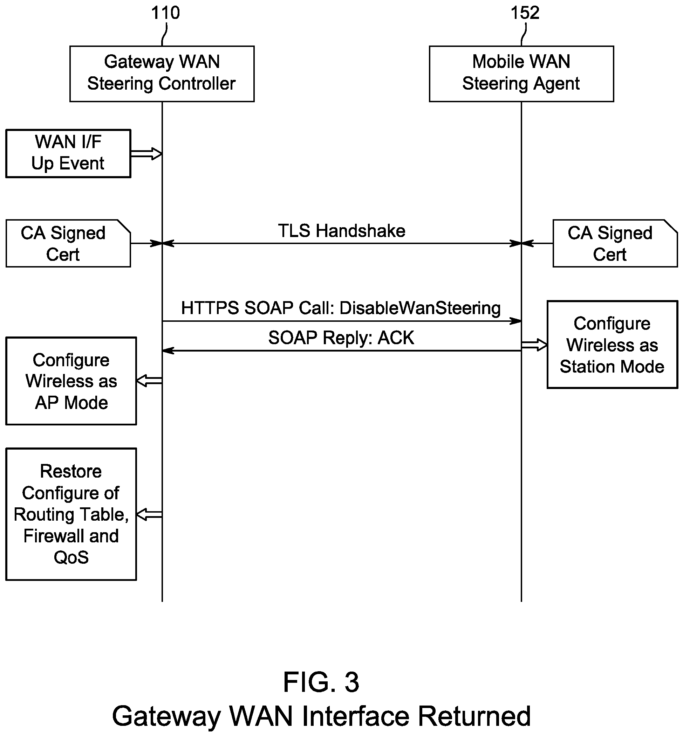

Figure 3 depicts a communication diagram for a UPnP based solution of the first embodiment version method where the WAN interface to the gateway returns and the mobile WAN connection for IoT sensor connectivity is no longer needed. Here, the gateway WAN steering controller 110 will be listening for WAN interface connectivity status via interface 109. Once the WAN interface up event is received, it initiates a sequence of actions to ensure WAN connectivity for the IoT devices are restored with minimal disturbance.

Referring in general to Figure 3, The Controller establishes TLS with the mobile agent. In detail, the gateway 110 instructs the mobile agent to disable the WAN steering Mobile agent to stops the data network of the mobile via the mobile WAN steering agent 152. Mobile agent 152 switches the wireless configuration from hotspot mode to station mode.

Example code is as follows:

```
       POST https://192.168.1.101:1234/ctl/wansteering
       <SOAP : Body>
             <DisableWanSteering xmlns:m= "....:wansteering:1"
       </Body>
       HTTP/1.1 200 OK
```

The gateway operates to configures the gateway wireless functionality as an Access Point. The original routing table, firewall and QoS configurations in the gateway are restored. This results in all of the LAN devices including IoT devices once again communicating with network 160 to use internet services via the gateway's WAN interface 109.

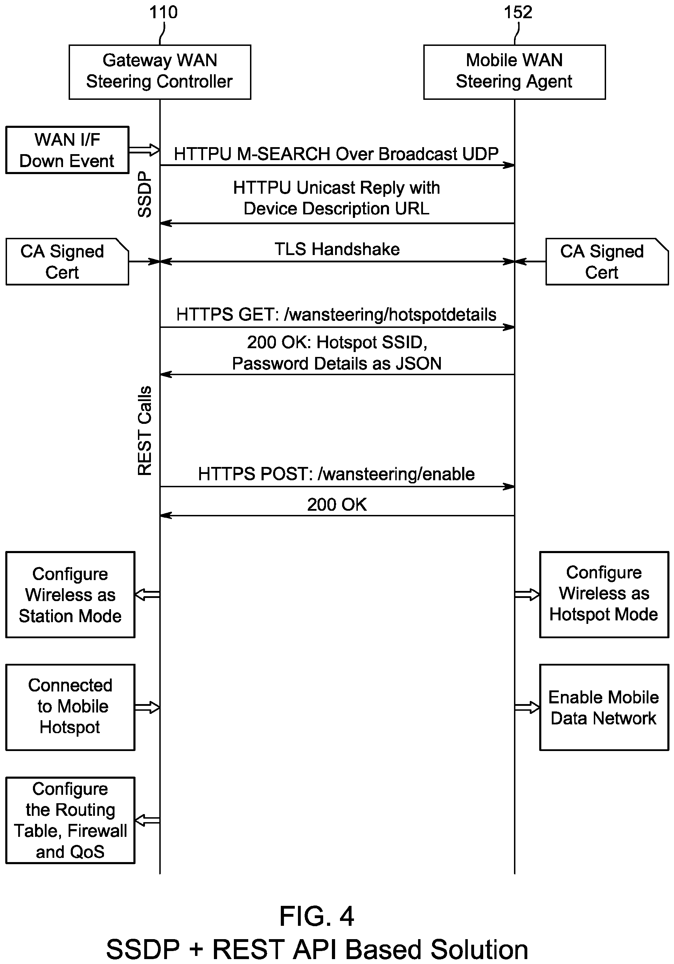

Figure 4 depicts a communication message diagram depicting an example second version of an embodiment method. This version uses the same principles as the first version of Figure 2. But, instead of using UPnP action calls, REST APIs are used to control the mobile agent 152. Thus, the principles of Figure 2 and Figure 4 are similar to establish a cellular connection via mobile device 150 to network 170 when the gateway 105 loses connectivity to the network 160.

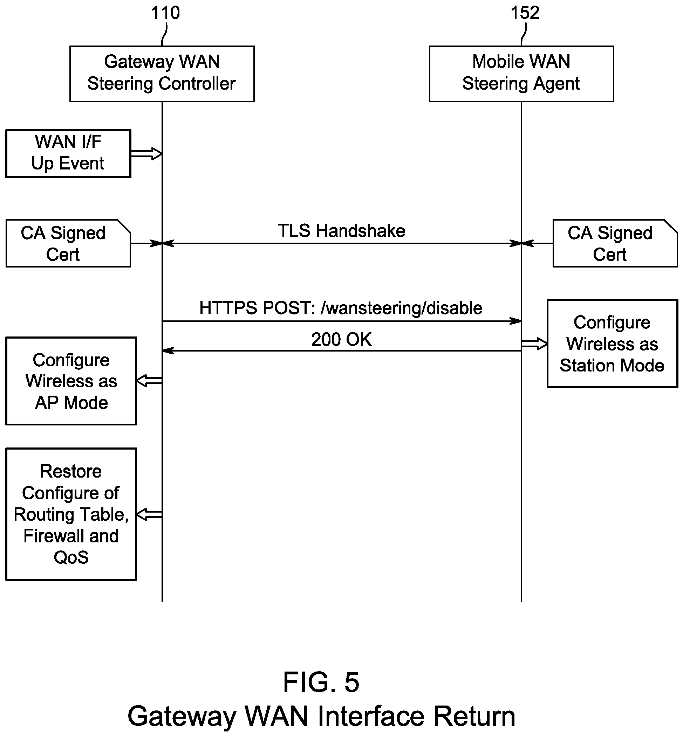

Upon a detection of a return of the connectivity of network 160 to the gateway 105, the connection diagram of Figure 5 re-establishes the network 160 connection similarly to that of the messages of Figure 3.

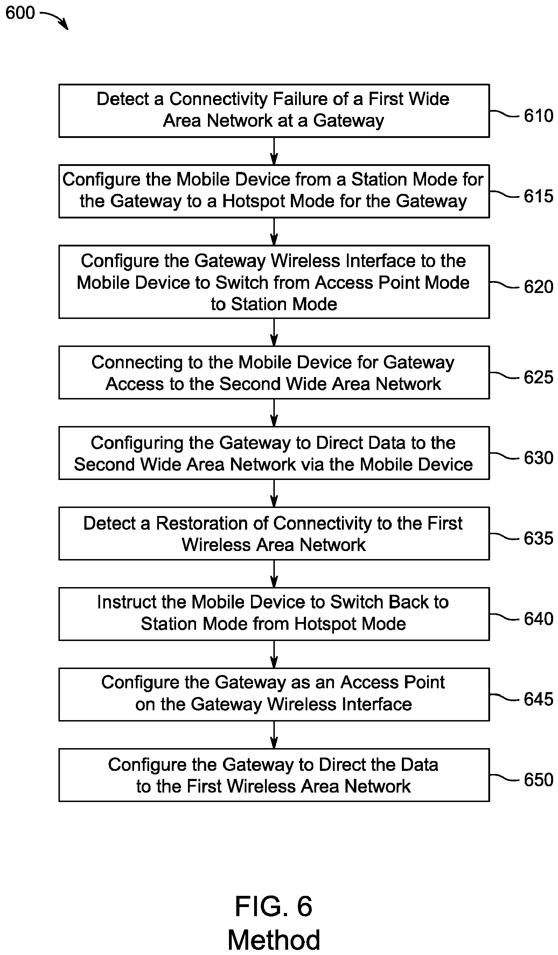

Figure 6 represents an example flow diagram method 600 of a method performed by the gateway 105 common to the embodiments of Figures 2, 3, 4, and 5. In Figure 6, the gateway at steps 610 through 630 may configure itself to connect from a first WAN connected to the gateway to a second WAN connected to a mobile device.

At step 610, the gateway detects a connectivity failure of a first wide area network associated with the gateway. This first WAN is the main WAN that is normally used in conjunction with the gateway functions. For example, the first gateway has a interface to the first WAN that allows standard services, such as internet services. An example first WAN is WAN 160 of Figure 1. The gateway is configured to have a wireless interface to a mobile device having access to a second wide area network, such as a cellular network 170.

At step 615, the gateway configures the mobile device, vi the mobile device wireless interface, from a station operating mode associated to the gateway to a hotspot operating mode that can provide services, such as cellular network services, for the gateway. At step 620, the gateway configures the gateway wireless interface to the mobile device to switch from access point mode to station mode. This allows the gateway to act as an associated station instead of an access point with the mobile device. At step 625, the gateway connects to the mobile device for gateway for possible access to the second wide area network. At step 630, the gateway configures the gateway to direct data to the second wide area network via the mobile device. For example, the gateway can direct that the IoT sensor data be directed to the cellular network of the mobile device which now acts as an access point for the gateway.

The steps 635 through 650 of the example method 600 may be separate from the steps 610 through 630. In one instance, the steps 635 through 650 can follow the execution of step 630 after an indeterminate time interval wherein at step 635 the gateway can detect the restoration of connectivity to the first wireless area network. At step 640, the gateway can instruct the mobile device to switch back to station mode from hotspot mode. At step 645, the gateway can configure itself to perform as an access point on the gateway wireless interface. At step 650, the gateway can configure itself to direct the data to the first wireless area network. This has the effect of enabling the gateway to provide the data to the first wireless area network via the access point on the gateway. This restores the gateway it its initial condition where the first WAN, such as network 160 is connected with the gateway and the mobile device is a station associated with the gateway. Here the mobile device has access to the cellular network, but no IoT data normally flows to the cellular network 170. The IoT data flows to the primary network 160 via the gateway.

The steps 610 to 630 can fully encompass the more detailed actions of the connection diagram of either Figure 2 or 4. As such, the method 600 steps 610 through 630 encompasses providing data to the first wide area network via a gateway interface before the step of detecting a connectivity failure in the first wide area network, the data comprising sensor data. In one embodiment, the sensor data is internet of things sensor data connected to the gateway using an internet-of-things protocol. The mobile device may be a mobile telephone having a cellular WAN connection. Also included in the steps of Figure 6, configuring the mobile device includes authenticating the gateway and the mobile device to each other before configuring the mobile device from a station mode of operation for the gateway to a hotspot mode (access point mode) of operation for the gateway. Configuring the gateway to direct the data to the mobile device in hotspot mode includes configuring firewall and routing tables of the gateway such that the data from internet of things sensors is directed to the wireless interface of the mobile device operating in hotspot mode. Configuring the mobile device is performed using universal plug and play action calls (UPnP) or representational state transfer (REST) application programming interfaces (APIs) to configure the mobile device.

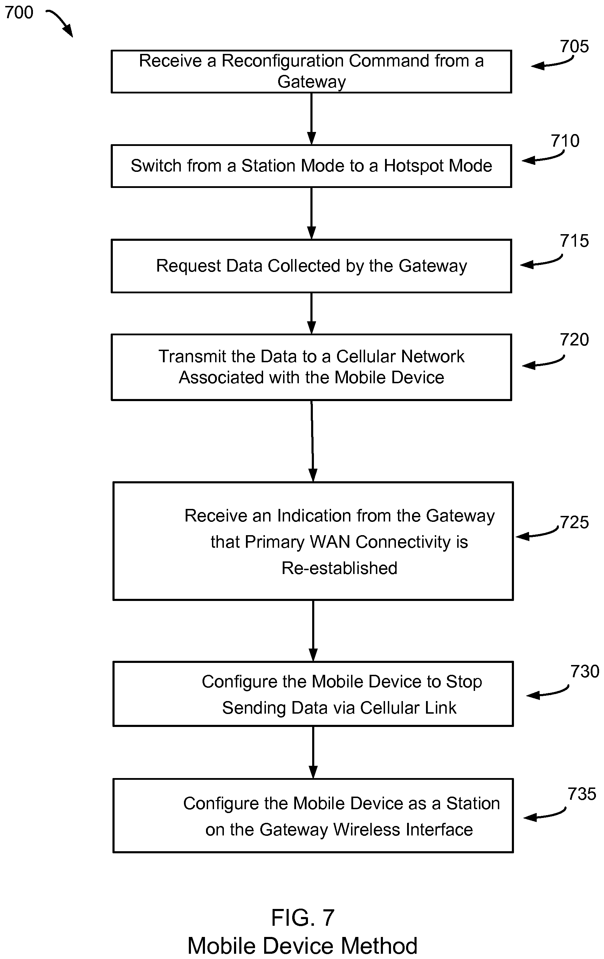

Figure 7 depicts an example method performed by a mobile device within the configuration of Figure 1. The example method of Figure 7 is performed by a mobile device, such as device 150 in response to a reconfiguration command produced by the gateway and received by the mobile device. The received reconfiguration command is in response to the gateway detecting a primary WAN connectivity failure. The reconfiguration command can be received at step 705 and interpreted by a WAN steering agent 152 within the mobile device 150. At step 710, the mobile device switches from a station mode of operation to a hotspot mode (access point mode) of operation. At step 715, the mobile device requests and receives data collected by the gateway. In one example, the data collected by the gateway is IoT sensor data. At step 720, the collected data is transmitted to a cellular network associated with the mobile device. Here, the mobile phone acts to respond to a gateway command to configure the mobile device to send sensor data to a secondary WAN, such as a cellular network WAN, after an associated gateway detects a connectivity failure in a primary WAN directly connected to the gateway. In one embodiment, the mobile device includes a wireless interface in communication with a gateway, wherein the gateway instructs the mobile device to switch from a station mode on the wireless interface to a hotspot mode for data provided by the gateway. The mobile device also includes a cellular transmitter interface for transmitting the data provided by the gateway and a processor configured to accept the instruction to switch from the station mode to the hotspot mode, the processor further configured to request the data from the gateway and communicate the data to a wide area network using the cellular transmitter.

The method of Figure 7 may, after step 720, continue to send IoT sensor data to the cellular network WAN. Eventually, the gateway receives an indication of restored connectivity to the primary WAN, such as WAN 160. In that event, the mobile device can receive an indication from the gateway that the primary WAN (i.e. 160) connection is re-established at step 725. The steering agent 152 in the mobile device 150 responds at step 730 by configuring the mobile device to stop transmitting IoT sensor data to the cellular network (i.e. secondary WAN). At step 735, the mobile steering agent in the mobile device configures the mobile device to operate as a station on the gateway wireless interface instead of as a hotspot. These steps restore the mobile device to operate in the station mode instead of the hotspot mode.

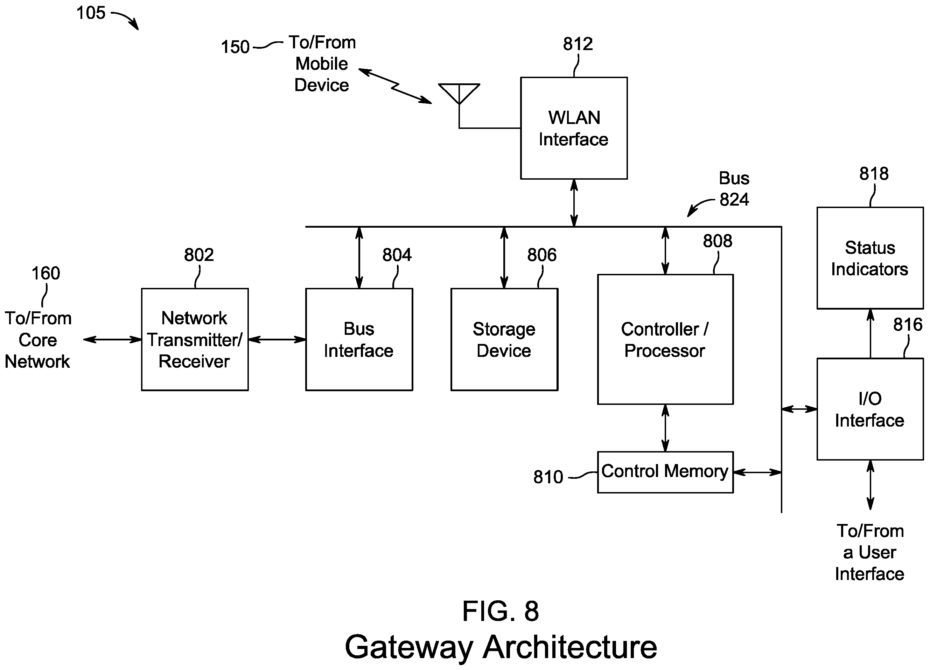

Figure 8 is one example embodiment of a gateway, such as gateway 105 of Figure 1. Connection to the core network, such as wide area network 160 is performed by network transmitter/receiver 802. Network transmitter/receiver 802 is configured to provide communications between the gateway and the service provider equipment of the network 160.

The network transmitter/receiver 802 interface also allows communication with the controller/processor 808 which controls data communications on the internal bus 824. Other non-bus implementations are also possible as is well known to those of skill in the art. Present on bus 824 are a storage device 806 which can be used for any general storage such as retrieved or requested data and network management data, parameters, and programs. Storage device 806 may also serve as disk or solid-state storage for the information collected during any mode of operation. Such information can include the storage of gateway acquired sensor data. Main program or utility and other programs are under the control of controller/processor 808.

Also configured in the gateway of Figure 8 is a wireless local area network (WLAN) interface 812. This interface allows access to and from remote station (STA) devices, such as mobile devices 145 and 150 of Figure 1 to access the resources and functionality provided to associated wireless devices of the gateway.

The controller/processor 808 of the gateway 105 of Figure 1 is configured to provide processing services for the steps of the methods of Figures 2, 3, 4, and 5. For example, the controller processor can provide instruction control to reconfigure either or both of the gateway and mobile device, monitor and control the interfaces of the network transmitter/receiver 802, the I/O interfaces 816 and 818, and the WLAN interface 812.

The controller/processor 808 may be a single processor or a multiplicity of processors performing the tasks of sensor data acquisition, user interface control, and resource management. Controller/processor 808 can perform the method described in Figures 2, 3, 4, or 5. Control memory 810 can supply program instruction and configuration control for controller/processor 808. The status indicators are a user interface 818 and allows a user, system owner, or system manager to see a status of the gateway 105. Such indicators may include a display, LEDs, printer interface, or data logging interface. An input/output (I/O) interface 816 allows the gateway to connect to a user interface, such as a connection to a personal computer or other device that can be used to configure and control the gateway functionality. Thus, a status of any one or more of the gateway. The I/O interface 816 may be a hardline interface, such as an Ethernet interface (local area network) or may operationally be substituted with an RF interface so that the gateway can communicate with a personal computer (PC), laptop computer, or display. Other interfaces that are possible via I/O interface 816 are an interactive interface which may include the use of a display device, keyboard, mouse, light pen, and the like.

It should be noted that the implementation of the concepts and principles applied in the disclosed innovation require the tangible application of hardware and or software that are adapted from components used to provide at least standard gateway services. Any or all of the embodiments described herein may be combined for implementation is a single embodiment with mixed or combined features and functionalities unless otherwise indicated.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device. Any embodiment presented in the disclosure may be combined with any other embodiment disclosed unless specifically otherwise stated.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random-access memory ("RAM"), a read-only memory ("ROM") or any other magnetic, optical, or solid-state media. The instructions may form an application program tangibly embodied on a computer-readable medium such as any of the media listed above or known to those of skill in the art. The instructions thus stored are useful to execute elements of hardware and software to perform the steps of the method described herein.

## Claims

1. A method comprising:
detecting a connectivity failure of a first wide area network at a network access device,
the network access device having a wireless interface to a mobile device having access to a second wide area network;
configuring the mobile device from a station mode for the network access device to a hotspot mode for the gateway;
configuring the wireless interface of the network access device to the mobile device to switch from access point mode to station mode and connecting to the mobile device for access of the network access device to the second wide area network;
configuring the network access device to direct data to the second wide area network via the mobile device.

2. An apparatus comprising:
a network access device having connection to a first wide area network
a wireless interface to the network access device in communication with a mobile device, the mobile device having connection to a second wide area network;
a data reception interface to the network access device to accept data from external devices;
a processor of the network access device configured to detect a connectivity failure of the first wide area network, instruct the mobile device to change from a station mode to a hotspot mode, instruct the wireless interface to switch from access point mode to station mode and connect to the mobile device for the network access device to access the second wide area network, and rout data received at the data reception interface to the second wide area network via the mobile device instead of to the first wide area network.

3. The method of claim 1, or the apparatus according to claim 2, further comprising:
providing data to the first wide area network via a network access device interface before the step of detecting a connectivity failure in the first wide area network, the data comprising sensor data.

4. The method of claim 3, or the apparatus according to claim 3, wherein the sensor data is internet of things sensor data connected to the network access device using an internet-of-things protocol.

5. The method of claim 4, or the apparatus according to claim 4, further comprising:
detecting a restoration of connectivity to the first wireless area network;
instructing the mobile device to switch back to station mode from hotspot mode;
configuring the network access device as an access point on the network access device wireless interface;
configuring the network access device to direct the data to the first wireless area network; and
providing the data to the first wireless area network via the access point on the network access device.

6. The method of claim 5, or the apparatus according to claim 5, wherein detecting a connectivity failure of the first wide area network at a network access device comprises detecting a failure in connectivity to a wired wide area network.

7. The method of claim 6, or the apparatus according to claim 6, wherein the wired wide area network comprises the internet.

8. The method of claim 6, or the apparatus according to claim 6, wherein configuring the mobile device from a station mode for the network access device to a hotspot mode for the network access device comprises configuring the mobile device to act as a mobile wireless hotspot for the network access device, wherein the mobile device is connected to a mobile data network.

9. The method of claim 8, or the apparatus according to claim 8, wherein the mobile data network is a cellular network.

10. The method of claim 8, or the apparatus according to claim 8, wherein configuring the mobile device comprises authenticating the network access device and the mobile device to each other before configuring the mobile device from a station mode for the network access device to a hotspot mode for the network access device.

11. The method of claim 10, or the apparatus according to claim 10, wherein configuring the network access device to direct the data to the mobile device in hotspot mode comprises configuring firewall and routing tables of the network access device such that the data from internet of things sensors is directed to the wireless interface of the mobile device operating in hotspot mode.

12. The method of claim 11, or the apparatus according to claim 11, wherein configuring the mobile device is performed using universal plug and play action calls (UPnP) or representational state transfer (REST) application programming interfaces (APIs) to configure the mobile device.

13. A method performed by a mobile device comprising:
in response to a reconfiguration command at a network access device, the method comprising:
switching from a station mode to a hotspot mode;
requesting data collected by the network access device;
transmitting the data to a cellular network associated with the mobile device.

14. A mobile device comprising:
a wireless interface in communication with a network access device, wherein the network access device instructs the mobile device to switch from a station mode on the wireless interface to a hotspot mode for data provided by the network access device;
a cellular transmitter interface for transmitting the data provided by the network access device;
a processor configured to accept the instruction to switch from the station mode to the hotspot mode, the processor further configured to request the data from the network access device and communicate the data to a wide area network using the cellular transmitter.

15. A computer-readable storage medium comprising instructions which when executed by a computer cause the computer to carry out the method of any of claims 1, and 3 to 12.
